Europäisches Patentamt

European Patent Office

Office européen des brevets

(19)

(11) Numéro de publication : **0 347 289 B1**

## (12) FASCICULE DE BREVET EUROPEEN

(45) Date de publication du fascicule du brevet :
**21.08.91 Bulletin 91/34**

(51) Int. Cl.$^5$ : **F16K 35/10**, F16K 35/06,
E05B 13/00

(21) Numéro de dépôt : **89401596.5**

(22) Date de dépôt : **09.06.89**

(54) **Dispositif de verrouillage pour vannes.**

(30) Priorité : **17.06.88 FR 8808120**

(43) Date de publication de la demande :
**20.12.89 Bulletin 89/51**

(45) Mention de la délivrance du brevet :
**21.08.91 Bulletin 91/34**

(84) Etats contractants désignés :
**BE DE GB LU NL**

(56) Documents cités :
**DE-C- 557 313**
**FR-A- 1 496 147**
**GB-A- 1 550 621**
**US-A- 4 024 740**

(73) Titulaire : **SOCIETE ANONYME MECAFRANCE
10 à 18, rue du Languedoc Zone Industrielle
Bethunes
F-95310 Saint-Ouen-L'Aumone (FR)**

(72) Inventeur : **Maurer, Daniel Pierre
28, rue emile Cordon Escalier 7
F-93400 St. Ouen (FR)**

(74) Mandataire : **Vander-Heym, Serge
CABINET R. VANDER-HEYM 172, Boulevard
Voltaire
F-75011 Paris (FR)**

## Description

La présente invention est relative à un dispositif de verrouillage pour vannes, du genre de celles décrites, par exemple, dans le brevet Français publié sous le N° 2559871.

Le corps de telles vannes présente une table, susceptible de recevoir une embase fixée sur cette dernière à l'aide de vis et immobilisant axialement la tige de l'actionneur permettant d'ouvrir ou de fermer la vanne.

La manoeuvre de telles vannes, ouverture ou fermeture, ne doit pouvoir être effectuée que par un personnel dûment autorisé et c'est la raison pour laquelle on utilise un cadenas de verrouillage. De ce fait, ces vannes présentent des pattes, généralement soudées, situées respectivement sur l'actionneur et sur l'embase précitée pour permettre la pose d'un cadenas.

Le verrouillage s'effectue donc à partir de l'embase vissée sur le corps de la vanne mais rien ne s'oppose à ce qu'une personne,non autorisée ou mal intentionnée, dévisse l'embase de maintien de l'actionneur et modifie la position du boisseau sphérique.

La présente invention, qui remédie à ces inconvénients, est remarquable en ce que la rotation de la tige de l'actionneur est empêchée par une goupille diamétrale immobilisée en rotation par rapport au corps de la vanne et comportant des moyens pour masquer l'une au moins des vis de fixation de l'embase sur le corps.

L'invention sera mieux comprise par la description qui va suivre, faite en se référant au dessin annexé à titre d'exemple indicatif seulement, sur lequel :

La figure 1 est une coupe d'une vanne équipée du dispositif de verrouillage de l'invention ;

La figure 2 est une vue en coupe, effectuée selon la ligne II-II de la figure 1 ;

La figure 3 est une vue partielle, en perspective éclatée, montrant les principaux organes coopérant au verrouillage.

En se reportant au dessin, on voit que 1 est le corps d'une vanne usuelle, à boisseau sphérique 2, susceptible d'être entraîné par un actionneur 3, commandé par une tige 4.

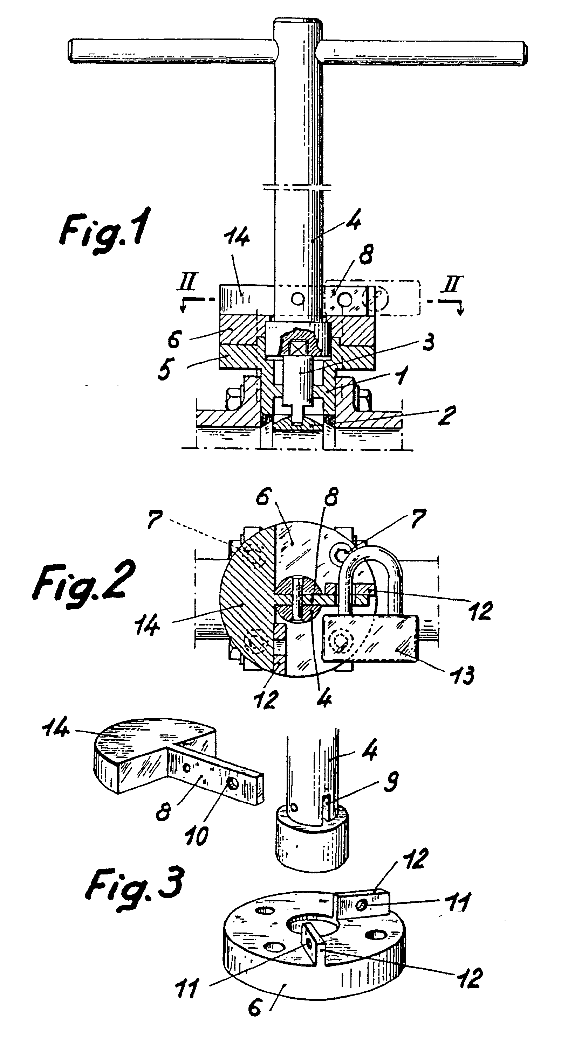

La tige 4 est maintenue sur la table 5 du corps 1 à l'aide d'une embase 6, fixée sur ladite table à l'aide de vis schématisées en 7, sur la figure 2.

Par la rotation de la tige 4, il est donc possible de manoeuvrer le boisseau 2.

Le problème posé consiste à empêcher la rotation de la tige 4 par une personne non autorisée.

Selon l'invention, ce résultat est obtenu en ce que la tige de l'actionneur est verrouillée en rotation à l'aide d'une goupille (8), diamétrale, ladite goupille présentant un trou (10) susceptible de coïncider avec un trou analogue prévu sur des pattes (12) fixes, afin de permettre l'immobilisation de ladite goupille par rapport à l'une desdites pattes à l'aide d'un cadenas usuel (13), ladite goupille présentant en outre des moyens pour masquer l'une, au moins, des vis (7) de fixation de l'embase (6) sur le corps (1).

La goupille 8 est maintenue contre l'une des deux pattes 12 au moyen d'un cadenas usuel 13.

Les faces d'appui des deux pattes 12 sont décalées angulairement d'un angle égal à celui de rotation du boisseau 2, en l'espèce de 90°.

La goupille 8 présente un talon 14, susceptible de prendre appui contre l'une ou l'autre des pattes 12.

Dès lors, on comprend que, lorsque le cadenas est en place, le retrait de la goupille est empêché par l'une des pattes et que sa rotation, donc celle de la tige 4, est empêchée par l'autre patte.

La dimension du talon 14 est telle que lorsque la goupille est en place, celui-ci s'étend au-dessus de l'une au moins des vis 7 maintenant l'embase 6 sur le corps 1.

Bien entendu, la présente invention ne se limite pas au mode de réalisation décrit et représenté mais s'étend, au contraire, à toutes variantes de formes et dimensions.

C'est ainsi, entre autres, que la goupille 8 peut être constituée par une fourche entre les branches de laquelle peut se loger la tige 4 qui, à cet emplacement, présente deux plats parallèles.

## Revendications

1. Dispositif de verrouillage pour vannes du genre de celles dont la tige de l'actionneur est immobilisée axialement à l'aide d'une embase (6) fixée sur la table du corps de la vanne à l'aide de vis, dans lequel la tige de l'actionneur est verrouillée en rotation à l'aide d'une goupille (8), diamétrale, ladite goupille présentant un trou (10) susceptible de coïncider avec un trou analogue prévu sur des pattes (12) fixes, afin de permettre l'immobilisation de ladite goupille par rapport à l'une desdites pattes à l'aide d'un cadenas usuel (13), ladite goupille présentant en outre des moyens pour masquer l'une, au moins, des vis (7) de fixation de l'embase (6) sur le corps (1).

2. Dispositif de verrouillage selon la revendication 1, caractérisé en ce que les pattes (12), sont portées par l'embase (6) et décalées angulairement d'un angle égal à celui de rotation du boisseau (2) de la vanne.

3. Dispositif de verrouillage selon l'une quelconque des revendications 1 et 2, caractérisé en ce que la goupille (8) présente un talon (14) susceptible de venir se placer contre l'une ou l'autre des pattes en masquant l'une, au moins, des vis (7) de fixation de l'embase (6).

## Patentansprüche

1. Verriegelungsvorrichtung für Ventile des Typs, bei dem die Ventilbetätigungsstange axial über einen mit Befestigungsschrauben (7) auf der Ventilgehäuseplatte montierten Sockel (6) blockiert und in diesem in Drehrichtung durch einen Querstift (8) verriegelt wird, der eine Bohrung (10) besitzt, welche mit entsprechenden Bohrungen auf zwei feststehenden Befestigungsflanschen (12) übereinstimmt, sodaß dadurch der Querstift an einem der Befestigungsflansche mit Hilfe eines handelsüblichen Vorhängeschlosses (13) festgehalten werden kann und der Querstift mit Mitteln zum Abdecken mindestens einer der Befestigungsschrauben (7) des Sockels (6) auf dem Ventilgehäuse (1) versehen ist.

2. Verriegelungsvorrichtung nach Patentanspruch 1, dadurch gekennzeichnet, daß die Befestigungsflansche (12) vom Sockel (6) gehalten werden und um einen Winkel gegeneinander versetzt sind, der dem Öffnungswinkel des Ventilkegels (2) entspricht.

3. Verriegelungsvorrichtung nach einem beliebigen der Patentansprüche 1 und 2, dadurch gekennzeichnet, daß der Querstift (8) einen Absatz (14) besitzt, der an einem der Befestigungsflansche anliegt und so mindestens eine der Befestigungsschrauben (7) des Sockels (6) abdeckt.

## Claims

1. Locking device for valves of the type in which the rod of the actuator or acting element is axially immobolized with the aid of a seat (6) secured to the table of the body of the valve by means of screws, wherein the rod of the actuator is rotary-locked by means of a diametral pin (8) having a hole (10) able to coincide with a similar hole provided on fixed tabs (12) so as to allow for said pin to be rendered stationary with respect to one of said tabs with the aid of a normal padlock (13), said pin further having means to mask at least one of the fixing screws (7) of the seat (6) on the body (1).

2. Locking device according to claim 1, wherein the tabs (12) are borne by the seat (6) and offset angularly by an angle equal to the angle of rotation of the throttle chamber (2) of the valve.

3. Locking device according to claim 1 or 2, wherein the pin (8) has a heel (14) able to be placed against either of the tabs by masking at least one of the fixing screws (7) of the seat (6).

Fig.1

II

14

4

8

6

5

3

1

2

Fig.2

7

6

8

7

14

12

12

4

13

14

4

9

8

10

Fig.3

11

12

11

12

6